# EUROPÄISCHE PATENTSCHRIFT

(11) **EP 2 066 595 B1**
(45) Veröffentlichungstag und Bekanntmachung des Hinweises auf die Patenterteilung: **19.11.2014**
(21) Anmeldenummer: 07818282.1
(22) Anmeldetag: 20.09.2007
(51) Int. Cl.: C04B 22/06, C04B 28/04

(54) **BINDEMITTEL ENTHALTEND PORTLANDZEMENT UND KALKHYDRAT**
BINDER COMPRISING PORTLAND CEMENT AND LIME HYDRATE
CIMENT PORTLAND CONTENANT DU LIANT, ET HYDRATE DE CALCIUM

(30) Priorität: 20.09.2006 DE 102006044727; 31.10.2006 DE 102006051343
(43) Veröffentlichungstag der Anmeldung: 10.06.2009
(73) Patentinhaber: HeidelbergCement AG, 69120 Heidelberg (DE)
(72) Erfinder: UNSIN, Joachim, 69115 Heidelberg (DE); DIETERMANN, Martina, 97922 Lauda (DE); KÜCHLIN, Dagmar, 69168 Wiesloch (DE); DIENEMANN, Wolfgang, 69256 Mauer (DE)
(74) Vertreter: Wagner, Jutta
(86) Internationale Anmeldenummer: PCT/EP2007/008192
(87) Internationale Veröffentlichungsnummer: WO 2008/034616

(56) Entgegenhaltungen:
- EP-A- 1 690 841
- EP-A- 1 719 742
- JP-A- 2003 246 657

## Beschreibung

Die vorliegende Erfindung betrifft die Verwendung von Calciumhydroxid zur Aktivierung der Hydratation der Calciumsilicat-Phasen im Portlandzementklinkeranteil von Bindemitteln sowie Bindemittelzusammensetzungen mit beschleunigter Druckfestigkeitsentwicklung enthaltend Zement nach DIN EN 197 oder DIN 1164 und Calciumhydroxid.

Nach wie vor besteht ein erhebliches Interesse in der Bauindustrie an qualitativ hochwertigen Zementen mit einer möglichst frühen Druckfestigkeitsentwicklung bei normgerechten Verarbeitungs- und Erstarrungseigenschaften. Substanzen, welche die gewünschte frühe Druckfestigkeitsentwicklung bewirken, sind an sich bekannt. Häufig werden durch solche Zusätze aber andere Eigenschaften des Zements in unerwünschter Weise beeinflusst.

Es ist auch bekannt Calciumhydroxid, häufig als Kalkhydrat oder Weißkalkhydrat bezeichnet, zu verschiedensten Zwecken Bindemitteln und bauchemischen Zusammensetzungen zuzufügen.

DE 32 15 777 beschreibt Mörtel, die neben Portlandzement auch Kalkhydrat enthalten. Ein Einfluss des Kalkhydrates auf die Druckfestigkeitsentwicklung wird nicht beschrieben.

DE 31 51 881 offenbart Bindemittelkomponenten für Bergbaumörtel, bei welchem einem Hemihydratgips ein alkalisch reagierender Stoff in Kombination mit Alkalisulfat zur Abbindebeschleunigung zugefügt wird. Der alkalisch reagierende Stoff kann ein Portlandzement oder Kalkhydrat sein, wobei berichtet wird, dass Bindemittel aus Hemihydratgips und Kalkhydrat oder Portlandzement im Vergleich zu reinem Hemihydratgips eine verzögerte Abbindung zeigen.

Die DE 34 37 899 beschreibt spritzbare, feuerfeste Gemische, bei denen Calciumhydroxid als ein möglicher Beschleuniger für Tonerdezement genannt wird.

Auch der Einsatz von Kalkhydrat zur Anregung von Hüttensand in Bindemitteln ist bekannt, z. B. aus DE 196 12 861. Hüttensand kann dabei Portlandzement ganz oder teilweise in einem Bindemittel ersetzen.

Aus DE 197 54 826 ist bekannt, dass Calciumhydroxid die Atmungsaktivität von Putz verbessert.

DE 101 13 978 schlägt Bindemittel aus 0,5 bis 80 % Zement, 0 bis 97 % Füllstoffen, 0 bis 3,5 % Verdickungsmittel, 1,0 bis 80 % redispergierbarem Polymerpulver, 0,02 bis 4 % Zinkverbindung und bis zu 30 % Alkali- bzw. Erdalkalihydroxid vor. Der Hydroxidzusatz soll die offene Zeit verlängern, also die Druckfestigkeitsentwicklung verlangsamen.

Gemäß DE 10 2004 016 127 B3 soll ein zwei-komponentiger Beschleuniger eine erste Komponente mit 40 bis 90 % Calciumhydroxid, 5 bis 50 % Calciumformiat und/oder 5 bis 20 % Weinsäure enthalten, wobei Calciumhydroxid ausschließlich als Lieferant von Calciumionen beschrieben wird und die Beschleunigung durch die zweite Komponente aus 20 bis 40 % Aluminium(hydroxy)sulfat, 10 bis 50 % Wasser und 5 bis 45 % Carbonsäure erreicht wird.

In Kombination mit Portlandzementen findet Calciumhydroxid in Form von technischem Weißkalkhydrat verbreitet Verwendung in bauchemischen Produkten, wie z. B. Putzen, Fliesenklebern usw., in denen es im Wesentlichen zur Beeinflussung der Konsistenz und der Verarbeitungseigenschaften eingesetzt wird.

Aus EP 1 690 841 ist es bekannt, dass ein Zusatz von Calciumhydroxid zu hydraulischen Bindemitteln die Erstarrung beschleunigt, sofern die Partikelgröße unterhalb von 3 µm liegt.

Die nicht vorveröffentlichte EP 1 719 742 beschreibt Bindemittel, denen zur Beschleunigung der Druckfestigkeitsentwicklung Calciumhydroxid mit einer BET-Oberfläche von mindestens 15 cm²/g zugesetzt wird.

Diese sehr feinen Calciumhydroxide haben den Nachteil, stark zu stauben und bei der Lagerung an Luft durch verstärkte Aufnahme von Feuchtigkeit und CO₂ in ihrer Aktivität beeinträchtigt zu werden. Darüber hinaus wurde gefunden, dass bei Verwendung von Kalkhydrat mit höherer BET-Oberfläche der Bedarf an verflüssigenden Betonzusatzmitteln zur Einstellung einer definierten Konsistenz steigt (siehe Tabelle 1).

**Tabelle 1**

| **Zusatzmittel** (Versuchsprodukte auf Polycarboxylat- ether-Basis) | **Zusatzmittelbedarf [%] für Anfangskonsistenz 220 mm, geprüft am Mörtel mit w/z = 0,40** | | **Zusatzmitt el-mehrbedarf [%]** |
|---|---|---|---|
| | **Produktionszement 1.1 mit grobem Kalkhydrat (BET 11,2 m²/g)** | **Produktionszement 1.1 mit feinem Kalkhydrat (BET 22,1 m²/g)** | |
| **VP 151.2006** | 0,65 | 0,80 | 23 |
| **VP 152.2006** | 0,70 | 0,85 | 21 |
| **VP 153.2006** | 0,65 | 0,80 | 23 |

Die preiswert kommerziell erhältlichen Kalkhydrate weisen die geforderte Feinheit nicht auf, d. h. es müssen kostenträchtigere Produkte verwendet werden. Beide oben genannten Dokumente stellen übereinstimmend fest, dass gröbere Calciumhydroxide keine brauchbare Wirkung zeigen.

Bei Versuchen zur Erhöhung der Frühfestigkeit von Zementen im Stundenbereich wurde nun unerwartet gefunden, dass bei Zementen und insbesondere Zementen CEM I und II nach DIN EN 197-1 Zusätze auch von gröberem Calciumhydroxid zu einer Erhöhung der sehr frühen Druckfestigkeitsentwicklung im Bereich von 5 bis 10 Stunden, insbesondere 6 bis 8 Stunden, führen. Die stärkste Wirkung ergab sich bei den Zementen mit dem höchsten Klinkeranteil.

Dies ist um so überraschender, als bei der Hydratation der Calciumsilicate C₃S (3CaO·SiO₂ "Alit") und C₂S (2CaO·SiO₂ "Belit") neben der Bildung von wasserhaltigen Calciumsilicathydraten auch die Abspaltung von Calciumhydroxid erfolgt, da die neu gebildeten Calciumsilicathydrate calciumärmer sind als die Ausgangsstoffe C₃S und C₂S. Die Gleichungen 1 und 2 zeigen das vereinfachte Reaktionsschema für C₃S (Gleichung 1) und C₂S (Gleichung 2).
Gleichung 1: 2 (3CaO·SiO₂) + 6 H₂O → (3CaO·2SiO₂·3H₂O) + 3 Ca(OH)₂
Gleichung 2: 2 (2CaO·SiO₂) + 4 H₂O → (3CaO·2SiO₂·3H₂O) + Ca(OH)₂

Die Reaktion mit Wasser verläuft beim calciumreicheren C₃S deutlich schneller als beim C₂S und damit ist C₃S die für die frühe Festigkeitsentwicklung im Stundenbereich verantwortliche Phase. Grundsätzlich spielt die chemisch/mineralogische Zusammensetzung des Klinkers eine wesentliche Rolle. Besonders bedeutsam ist ein hoher Gehalt des Klinkers an reaktivem C₃S, dessen Reaktivität durch gezielte Veränderung des Kristallgitters durch Einbau von verschiedenen Elementen erhöht werden kann. Dazu gehören z. B. Alkalien, insbesondere K und Na, aber auch andere Elemente wie z. B. Al, Fe und S sowie verschiedene Spurenelemente. Die Frühfestigkeitsentwicklung von Portlandzementen wird auch von unterschiedlichen weiteren Parametern beeinflusst. Neben Kenngrößen des Zementes, wie z. B. Mahlfeinheit und Korngrößenverteilung, nehmen auch die Brenn- und Kühlbedingungen im Ofensystem, insbesondere die Kühlgeschwindigkeit, maßgeblichen Einfluss auf die Reaktivität, u. a. durch ihre Wirkung auf die Kristallitgröße der Phasen.

In der Praxis besteht weiter die Möglichkeit, die Frühfestigkeit durch betontechnologische Maßnahmen zu erhöhen. Neben der Verringerung des Wasserzementwertes kann die Hydratation der Calciumsilicate durch Wärmebehandlung oder durch Zusatz so genannter Erhärtungs-Beschleuniger angeregt werden. Bei letzteren handelt es sich um Zusatzmittel, die sich auf die Lösungsgeschwindigkeit des C₃S auswirken. Bekannt sind z. B. CaCl₂, Rhodanide und Formiate. Die wirksamste Substanz dieser Gruppe, das CaCl₂, ist allerdings, wie alle Chloride, auf Grund ihrer korrosionsfördernden Eigenschaften für die Anwendung in Stahlbeton verboten. Die Wärmebehandlung von Beton ist dagegen bei sachgemäßer Anwendung gemäß der "Richtlinie zur Wärmebehandlung von Beton", DAfStb, 1989, zielführend, erfordert aber in der Regel zusätzliche Maßnahmen, wie z. B. eine Vorlagerung vor Beginn der Erwärmung, um mögliche Schädigungen der Bauteile bei späterem Wasserzutritt durch sekundäre Ettringitbildung zuverlässig zu verhindern.

Calciumhydroxid wird dagegen im Verlauf der festigkeitsbildenden Calciumsilicathydratation im Klinkeranteil aller Portlandzemente in erheblichem Maße gebildet (s. Gleichungen 1 und 2). Der bei vollständiger Hydratation gebildete Zementstein besteht bis zu ca. einem Viertel seiner Masse aus Calciumhydroxid. Es ist somit ein integraler Bestandteil des Zementsteins und Träger des Stahl-Korrosionschutzes in Mörteln und Betonen. In dieser Eigenschaft unterscheidet es sich signifikant von allen bisher üblichen Additiven zur Erhöhung der Frühfestigkeit. Ein begrenzter und unter zementtechnischen Gesichtspunkten kontrolliert durchgeführter Zusatz von Calciumhydroxid zu Portland- oder Portlandkompositzementen, mit dem Ziel der Frühfestigkeitssteigerung, stellt insofern keinen artfremden Eingriff in das Hydratationsgeschehen dar.

Eine chemische Reaktion wird üblicherweise dadurch begünstigt, dass ein oder mehrere Reaktionsprodukte aus dem Gleichgewicht des Systems entfernt werden. Es wäre demnach zu erwarten, dass die Hydratation der Calciumsilicate des Portlandzementes, in deren Verlauf sich Calciumhydroxid bildet (s. Gleichungen 1 und 2), durch Zugabe von Calciumhydroxid behindert wird.

Es hat sich nun aber überraschender Weise gezeigt, dass es durch Zusatz von Calciumhydroxid möglich ist, die Hydratation der Calciumsilicate in Portlandzementen entgegen der Erwartung zu aktivieren, d. h. den messbaren Hydratationsbeginn zuverlässig zu einem früheren Zeitpunkt hin zu verschieben, und die sogenannte Ruhe- oder Induktionsperiode zu verkürzen. Besonders vorteilhaft ist dabei, dass die aktivierende Wirkung einer definierten Calciumhydroxidmenge bei weniger reaktivem C₃S stärker ist als bei höher reaktivem. Dies konnte anhand der Druckfestigkeitsmessung nach DIN EN 196-1 an modifizierten Normmörteln mit Wasserzementwerten 0,40 für drei verschiedene Zemente nachgewiesen werden, deren Ergebnisse in Tabelle 2 zusammengefasst sind.

**Tabelle 2:**

| | **6h-Druckfestigkeit [MPa]** | |
|---|---|---|
| | **ohne Calciumhydroxid** | **mit 5% Calciumhydroxid** |
| **Zement 1** | 11,3 | 16,5 |
| **Zement 2** | 9,1 | 16,0 |
| **Zement 3** | 4,6 | 14,3 |

Dies führt u. a. dazu, dass die zu einem definierten frühen Zeitpunkt erreichbare Druckfestigkeit bei Zementen des gleichen Typs nach DIN EN 197-1 unterschiedlicher Herkunft in einem engen Rahmen vorhergesagt bzw. eingestellt werden kann. Erfindungsgemäß lässt sich so bei Portlandzement mit Feinheiten im Bereich von 4500 bis 5000 cm²/g Blaine durch Zusatz von 1 bis 10 Gew.-% Calciumhydroxid die Druckfestigkeit nach 6 Stunden um mindestens 5 MPa steigern. Bei gröberen Zementen fällt die Steigerung geringer aus, z. B. etwa 2 MPa, bei feineren Zementen höher, z. B. mindestens 7 oder 10 MPa. So wurde bei einem Zement mit 7500 cm²/g Blaine durch Zusatz von 5 % Kalkhydrat mit erfindungsgemäßer Feinheit eine Druckfestigkeitssteigerung am Mörtel im Alter von 6 Stunden von 0,6 MPa auf 14,2 MPa gefunden.

Je mehr Kalkhydrat zugesetzt wird, desto größer ist die Hydratationswärmeentwicklung im Zeitbereich 5 bis 10 Stunden und damit auch die Druckfestigkeitssteigerung. Jedoch begrenzt der Einfluss des Kalkhydrates auf die Wirkung der anderen üblicherweise enthaltenen Zusatzmittel die maximale Zugabemenge.

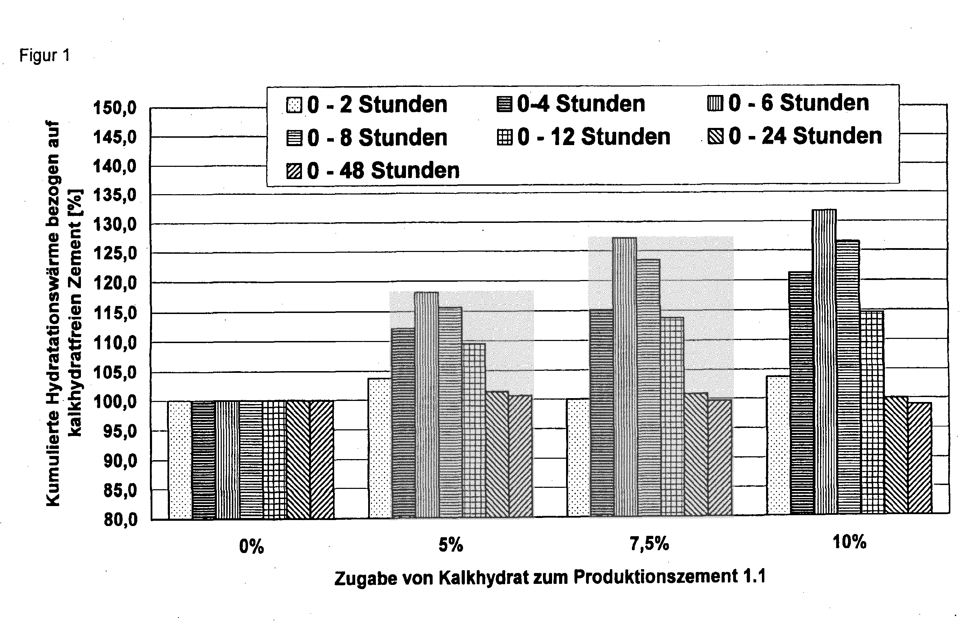

Dies veranschaulicht Figur 1. In Figur 1 ist jeweils die im angegebenen Zeitraum freigesetzte Hydratationswärme mit der auf 100 % normierten Hydratationswärme im Zeitraum 0 bis 2 Stunden desselben Zements verglichen. Man erkennt, dass bis zu einem Zusatz von 10 % Ca(OH)₂ die Hydratationswärme im Bereich ab 2 Stunden bis zu 12 Stunden signifikant ansteigt während ab 24 Stunden keine Unterschiede auftreten. Das bedeutet, dass weder die normgemäße Erstarrung noch die normgemäße Festigkeit nach 1 Tag beeinflusst werden. Gleichzeitig lässt sich aber in Zeitbereichen von 6 und 8 Stunden eine erhöhte Druckfestigkeit erreichen. Die mit der erhöhten Wärementwicklung im Bereich 0 bis 4 Stunden angezeigte Druckfestigkeit ist in der Praxis meist noch nicht ausreichend, nach 6 Stunden wird jedoch eine praktisch brauchbare Druckfestigkeit erreicht.

Bei feineren Calciumhydroxiden wird die Erstarrung stärker beschleunigt, was erfindungsgemäß nicht erwünscht ist. Erfindungsgemäß soll die Erstarrung normgerecht verlaufen, d.h. eine geringe Beschleunigung ist tolerabel, aber die Zeit soll.nicht deutlich unter 1 Stunde, vorzugsweise nicht deutlich unter 1 ½ Stunden sinken.

Die Hauptwirkung der Zugabe von Calciumhydroxid besteht darin, dass der Beginn der festigkeitsbildenden Calciumsilicathydratation um bis zu 2 Stunden vorgezogen wird - bei Einhaltung normgerechten Erstarrens. So wird bei einem Zement, der ohne Kalkhydratzusatz bei 7 bis 8 Stunden eine praxisrelevante Druckfestigkeit entwickelt hat, diese auf 5 bis 6 Stunden vorgezogen. Damit sind erhebliche Vorteile für einen großen Anwenderkreis verbunden. Bei der Fertigteilherstellung z. B. werden frühere Ausschalzeiten und damit höhere Taktfrequenzen ermöglicht. Auf die spätere Festigkeitsentwicklung und die Endfestigkeit ergibt sich kein negativer Einfluss, so dass die gewünschte beschleunigte Druckfestigkeitsentwicklung bei normgerechten Zementen ohne Nachteile erreicht und die genannte Aufgabe gelöst wird.

Somit stellt die Erfindung ein Verfahren zur Beschleunigung der Druckfestigkeitsentwicklung bereit, bei welchem einer hydraulischen Bindemittelzusammensetzung auf Basis von Portlandzement Calciumhydroxid zugefügt wird, sowie eine Bindemittelzusammensetzung mit hoher Frühfestigkeit bestehend aus Portlandzement, gegebenenfalls üblichen Zusatzmitteln und/oder Zusatzstoffen und 1 bis 10 Gew.-% Calciumhydroxid bezogen auf den Zement.

Die Bindemittelzusammensetzung basiert auf Portlandzement, im folgenden auch kurz als Zement bezeichnet. Es ist im Rahmen der Erfindung aber möglich, mit dem erfindungsgemäßen Verfahren auch die Frühfestigkeit von Bindemittelzusammensetzungen bzw. hydraulisch härtenden Zusammensetzungen wie Beton, Mörtel etc. zu erhöhen, die neben Portlandzementklinker latenthydraulisch oder puzzolanisch reagierende Stoffe enthalten, wie z. B. Hüttensand, Silicastaub oder Flugasche.

Bevorzugt werden Bindemittelzusammensetzungen, die ausschließlich Portlandzement CEM I oder Portlandkompositzement CEM II nach DIN EN 197-1, Ausgabe 2004-08, DIN 1164-10, Ausgabe 2004-08, oder DIN 1164-11, Ausgabe 2003-11, als Bindemittel enthalten. Ganz besonders bevorzugt werden Portlandzemente CEM I.

Als Calciumhydroxid eignet sich im Prinzip jedes Produkt, sofern keine die Hydratation des Zementes störenden Verunreinigungen enthalten sind. Aus Kostengründen kommen insbesondere technische Produkte, vielfach als Kalkhydrat bezeichnet, in Betracht. Die Menge beträgt vorzugsweise von 1 bis 10 Gew.-%, insbesondere von 2 bis 7 Gew.-% und besonders bevorzugt etwa 5 Gew.-% bezogen auf den Zement. Das Calciumhydroxid hat eine Oberfläche nach BET von 7 bis 14 m²/g, insbesondere von 11 bis 14 m²/g. Die mittleren Teilchengrößen liegen im Bereich von 4 bis 10 µm, vorzugsweise 4,5 bis 7 µm.

Weiterhin können der Bindemittelzusammensetzung sowie den damit hergestellten Mörteln und Betonen weitere an sich bekannte Betonzusatzmittel und/oder Betonzusatzstoffe sowie die üblichen Gesteinskörnungen zugesetzt werden.

Unter Betonzusatzmitteln sind beispielsweise handelsübliche Fließmittel, Betonverflüssiger, Luftporenbildner, Dichtungsmittel, Stabilisierer, Schaumbildner und Beschleuniger zu verstehen. Soweit vorhanden werden diese Zusatzmittel in den üblichen Mengen eingesetzt, typischerweise und abhängig vom Zusatzmittel z. B. in Mengen von 0,1 bis 10 Gew.-% bezogen auf das Bindemittel. Solche Zusatzmittel werden häufig bereits der Bindemittelzusammensetzung zugefügt.

Als Betonzusatzstoffe sind beispielhaft zu nennen Flugasche, Silicastaub, Trass, Gesteinsmehl, Pigmente und Kunststoffdispersion. Die Mengen liegen je nach Zusatzstoff üblicherweise im Bereich von 1 bis 50 Gew.- % bezogen auf den Zement.

Unter Gesteinskörnungen versteht man vor allem Sand, Kies, Splitt und ähnliches. Auch diese Bestandteile werden in den üblichen Mengen verwendet.

So enthält ein mit dem erfindungsgemäßen Bindemittel hergestellter Beton typischerweise 240 bis 450 kg/m³ Zement, 0 bis 200 kg/m³ Betonzusatzstoff, 0 bis 36 kg/m³ Betonzusatzmittel, 100 bis 250 kg/m³ Wasser und 1600 bis 2000 kg/m³ Gesteinskörnung.

Das erfindungsgemäße Verfahren sowie die erfindungsgemäßen Bindemittel eignen sich besonders im Bereich der Fertigteilherstellung. Die Zusammensetzung eines Betons für die Herstellung von Fertigteilen orientiert sich zunächst an den Mindestanforderungen aus den Expositionsklassen und den geforderten Betoneigenschaften. Um den Produktionszyklus im Fertigteilwerk möglichst kurz zu halten, ist es darüber hinaus bei der Herstellung von Fertigteilen in der Regel wichtig, die Fertigteile schon bald nach dem Betonieren ausschalen zu können. Hierfür ist eine ausreichende Frühfestigkeit des Betons erforderlich. Diese wird bisher üblicherweise durch eine Absenkung des Wasserzementwertes und/oder eine (kostenintensive) Wärmebehandlung realisiert. Um dennoch eine ausreichende Verarbeitbarkeit zu erreichen, muss dann der Zementgehalt etwas angehoben werden und werden vorzugsweise Gesteinskörnungen verwendet, deren Kornzusammensetzungen eine Sieblinie mit geringem Wasseranspruch ermöglichen, sowie verflüssigende Zusatzmittel zugegeben.

Erfindungsgemäß ist es nun möglich die Frühfestigkeit noch weiter zu steigern. Ein erfindungsgemäßer Beton für die Herstellung von Fertigteilen enthält z. B. 380 kg/m³ Zement, 190 kg/m³ Wasser, 550 kg/m³ Sand 0/2, 508 kg/m³ Kies 2/8, 637 kg/m³ Kies 8/16 und 1,5 kg/m³ Fließmittel oder z. B. 450 kg/m³ Zement, 203 kg/m³ Wasser, 580 kg/m³ Sand 0/2, 382 kg/m³ Gabbrosplitt 2/5, 249 kg/m³ Gabbrosplitt 5/8, 287 kg/m³ Gabbrosplitt 8/11, 325 kg/m³ Gabbrosplitt 11/16 und 5 kg/m³ Fließmittel.

Die Erfindung soll anhand der folgenden Beispiele näher veranschaulicht werden, ohne jedoch auf die konkret beschriebenen Ausführungsformen beschränkt zu sein. Soweit nicht anders angegeben, beziehen sich im Rahmen der vorliegenden Erfindung sämtliche Angaben von Teilen und % auf das Gewicht.

### Beispiel 1

Ausgehend von den Klinkern und Sulfatträgern zweier Produktionsstätten wurden in Labormahlungen entsprechend Tabelle 3 zwei Versuchszemente CEM I 52,5 R je Klinker hergestellt: jeweils ein Zement ohne und ein Zement mit 5 % Weißkalkhydrat ip 500 der maxit GmbH, Istein, DE. Das Kalkhydrat hatte eine BET-Oberfläche von 11 m²/g und einen mittleren Teilchendurchmesser von 6 µm.

**Tabelle 3:**

| **Zement** | **Werk** | **Kalkhydrat [%]** |
|---|---|---|
| Laborzement 1.1 | 1 | - |
| Laborzement 1.2 | 1 | 5,0 |
| Laborzement 2.1 | 2 | - |
| Laborzement 2.2 | 2 | 5,0 |

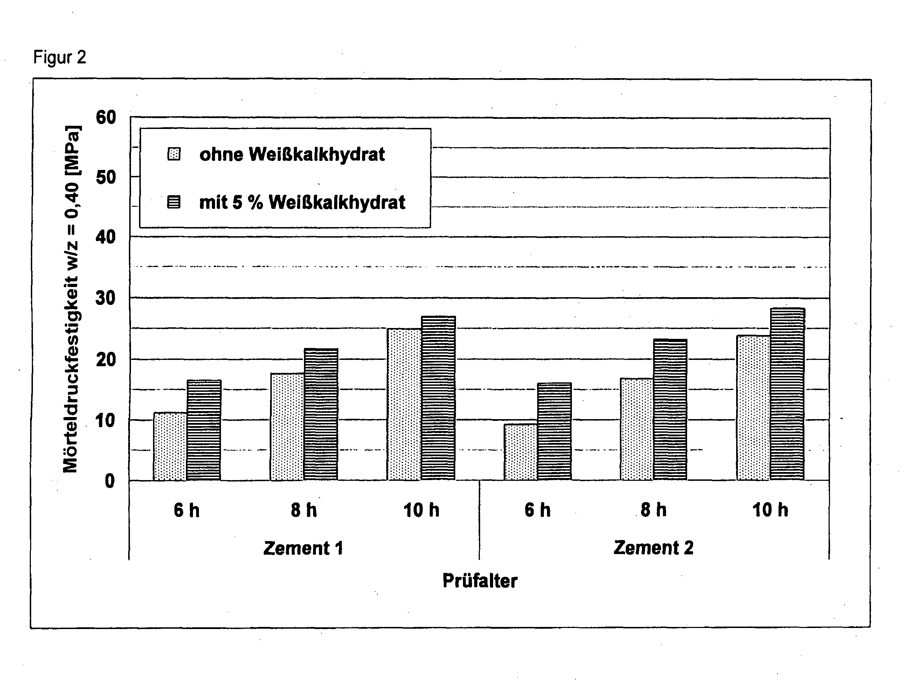

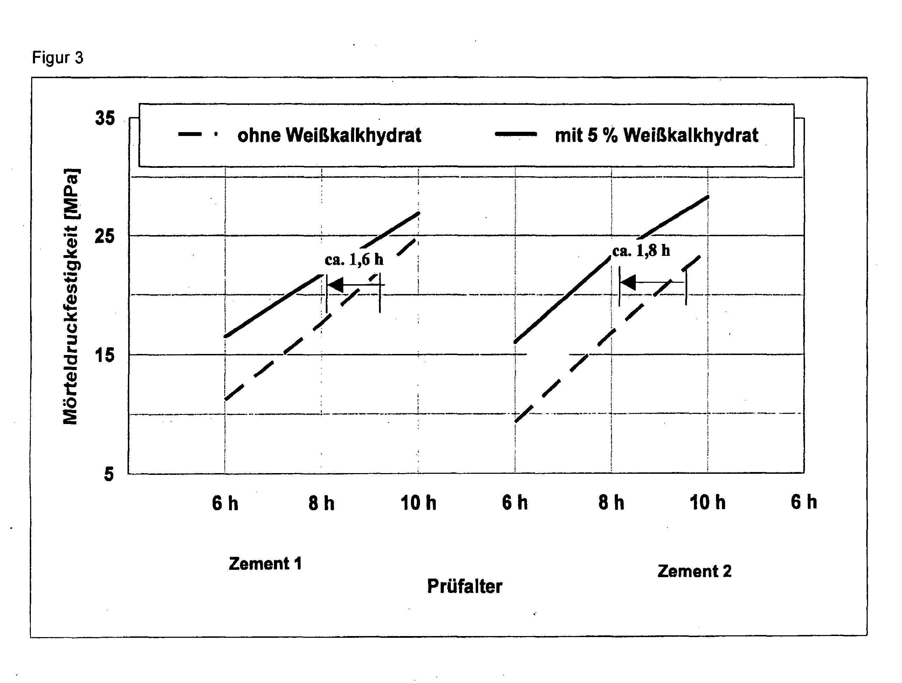

Mit den in Tabelle 3 aufgelisteten Versuchszementen wurden modifizierte Normmörtel nach DIN EN 196-1, Ausgabe 2005-05, hergestellt. Die Modifizierung lag darin, dass die Mörtel einen im Vergleich zum Normmörtel reduzierten Wasserzementwert hatten: 0,40 anstatt 0,50. An den hergestellten Mörtelprismen wurde die Druckfestigkeit gemäß DIN EN 196-1 im Alter von 6, 8 und 10 Stunden ermittelt, siehe Figur 2. Man erkennt, dass durch den Zusatz von Kalkhydrat die Frühfestigkeit bei beiden Zementen deutlich gesteigert wird. Die Druckfestigkeitsentwicklung wird zwischen 1,6 und 1,8 Stunden vorverlegt, siehe Figur 3. Dies kann z. B. für die Verkürzung der Produktionszyklen bei der Herstellung von Fertigteilen positiv genutzt werden.

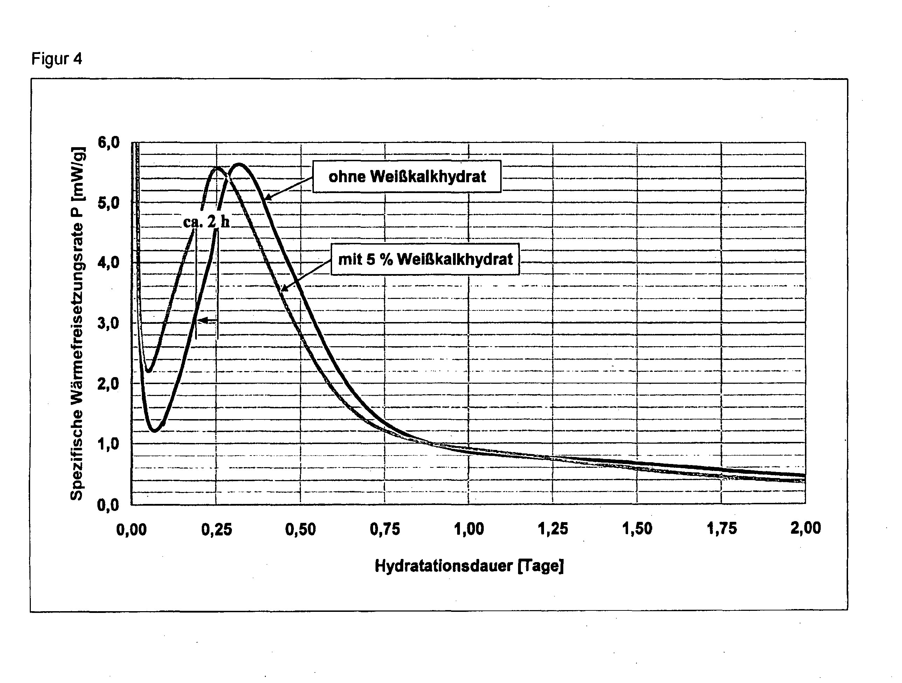

Neben der Druckfestigkeit wurde die Hydratationswärmeentwicklung an Zementleimproben mit w/z = 0,40 in einem isothermen Wärmeflusskalorimeter (Differentialkalorimeter TAM-Air, Thermometric AB, Schweden) geprüft. Auch diese Ergebnisse zeigen, dass die Zugabe von 5% des technischen Calciumhydroxides ip 500 den Beginn der Calciumsilicathydratation um ca. 2 h vorverlegt, siehe Figur 4.

### Beispiel 2

Auf Basis der in Beispiel 1 erläuterten Versuche wurden im Werk 1 und 2 je zwei Produktionszemente CEM I 52,5 R hergestellt, ein Zement ohne und ein Zement mit 5 % Kalkhydrat ip 500, siehe Tabelle 4.

**Tabelle 4:**

| **Produktionszement** | **Kalkhydrat [%]** |
|---|---|
| Produktionszement 1.1 | - |
| Produktionszement 1.2 | 5,0 |
| Produktionszement 2.1 | - |
| Produktionszement 2.2 | 5,0 |

Die Produktionszemente 1.1 und 2.1 hatten die in Tabelle 5 aufgeführte chemische Zusammensetzung und Feinheit.

**Tabelle 5:**

| | **Produktionszement 1.1** | **Produktionszement 2.1** |
|---|---|---|
| **Blaine [cm²/g]** | 4690 | 4950 |
| **Glühverlust [%]** | 0,33 | 1,0 |
| **SiO₂ [%]** | 22,9 | 20,1 |
| **Al₂O₃ [%]** | 3,8 | 5,4 |
| **Fe₂O₃ [%]** | 1,4 | 3,1 |
| **CaO [%]** | 66,8 | 65,4 |
| **MgO [%]** | 0,7 | 1,2 |
| **K₂O [%]** | 0,6 | 0,4 |
| **SO₃ [%]** | 3,0 | 3,2 |

Gemäß DIN EN 196-3 wurde an den beiden Zementen der Tabelle 5 Wasseranspruch sowie Erstarrungsbeginn und -ende geprüft, siehe Tabelle 6.

Man erkennt, dass durch den Zusatz von Kalkhydrat sowohl Erstarrungsbeginn als auch Erstarrungsende vorverlegt werden, aber innerhalb des Normbereiches verbleiben.

**Tabelle 6**

| | | **Produktionszement** | | | |
|---|---|---|---|---|---|
| **Eigenschaft** | | **1.1** | **1.2** | **2.1** | **2.2** |
| **Wasseranspruch** | **[%]** | 33,0 | 34,0 | 34,5 | 35,5 |
| **Erstarrungsbeginn** | **[h:min]** | 2:00 | 1:20 | 2:30 | 2:00 |
| **Erstarrungsende** | **[h:min]** | 2:45 | 1:50 | 3:10 | 2:45 |
| **Druckfestigkeit [MPa] nach** | **6h** | 4,8 | 14,9 | 6,6 | 10,6 |
| | **8h** | 13,9 | 21,5 | 14,0 | 18,1 |
| | **10h** | 24,2 | 26,1 | 22,2 | 23,6 |
| | **28d** | 86,7 | 79,0 | 84,4 | 78,6 |

Mit den beiden Produktionszementen der Tabelle 5 wurden modifizierte Normmörtel mit Wasserzementwerten von 0,40 hergestellt. An den hergestellten Mörtelprismen wurde die Druckfestigkeit gemäß DIN EN 196-1 im Alter von 6, 8 und 10 Stunden sowie 28 Tagen ermittelt. Die Ergebnisse sind in Tabelle 6 zusammengefasst. Die Druckfestigkeit wird im Bereich von 6 bis 10 Stunden gesteigert, während die Endfestigkeit nach 28 Tagen nicht erhöht wird, das heißt normgerecht ist.

## Patentansprüche

1. Verfahren zur Beschleunigung der Druckfestigkeitsentwicklung von hydraulisch härtenden Zusammensetzungen im Bereich von 1 bis 10 Stunden enthaltend eine Bindemittelzusammensetzung auf Basis von Portlandzement, **dadurch gekennzeichnet, dass** der Bindemittelzusammensetzung Calciumhydroxid mit einer Oberfläche nach BET von 7 bis 14 m²/g zugesetzt wird.

2. Verfahren gemäß Anspruch 1, **dadurch gekennzeichnet, dass** das Calciumhydroxid eine Oberfläche nach BET von 11 bis 14 m²/g aufweist.

3. Verfahren gemäß Anspruch 1 oder 2, **dadurch gekennzeichnet, dass** das Calciumhydroxid in Mengen von 1 bis 10 Gew.-% bezogen auf den Portlandzement, bevorzugt in Mengen von 2 bis 7 Gew.-% und insbesondere von etwa 5 Gew.-% zugefügt wird.

4. Verfahren gemäß Anspruch 1, 2 oder 3, **dadurch gekennzeichnet, dass** die hydraulisch härtende Zusammensetzung ein Beton ist.

5. Verfahren gemäß Anspruch 1, 2 oder 3, **dadurch gekennzeichnet, dass** die hydraulisch härtende Zusammensetzung ein Mörtel ist.

6. Bindemittelzusammensetzung mit erhöhter Frühfestigkeit, bestehend aus Portlandzement CEM I und gegebenenfalls Zusatzmitteln und/oder Zusatzstoffen, **dadurch gekennzeichnet, dass** Calciumhydroxid mit einer Oberfläche nach BET von 7 bis 14 m²/g in Mengen von 1 bis 10 Gew.-% bezogen auf den Portlandzement enthalten ist.

7. Verwendung einer Bindemittelzusammensetzung gemäß Anspruch 6 zur Herstellung von Fertigteilbeton.

8. Verwendung gemäß Anspruch 7, **dadurch gekennzeichnet, dass** ein oder mehrere Zusatzmittel ausgewählt unter Fließmittel, Betonverflüssiger, Luftporenbildner, Dichtungsmittel, Stabilisierer, Schaumbildner und Beschleuniger zugefügt sind.

9. Verwendung gemäß Anspruch 7 oder 8, **dadurch gekennzeichnet, dass** der Beton 240 bis 450 kg/m³ Zement, 0 bis 200 kg/m³ Betonzusatzstoff, 0 bis 36 kg/m³ Betonzusatzmittel, 100 bis 250 kg/m³ Wasser und 1600 bis 2000 kg/m³ Gesteinskörnung enthält.

## Claims

1. Method of accelerating the development of compressive strength in the range from 1 to 10 hours of hydraulically hardening compositions comprising a binder composition based on Portland cement, **characterized in that** calcium hydroxide with a BET surface area from 7 to 14 m²/g is added to the binder composition.

2. Method according to claim 1, **characterized in that** the calcium hydroxide has a BET surface area 11 to 14 m²/g.

3. Method according to claim 1 or 2, **characterized in that** the calcium hydroxide is added in an amount from 1 to 10 % by weight based on the Portland cement, preferably in an amount from 2 to 7 % by weight and in particular of about 5 % by weight.

4. Method of claim 1, 2 or 3, **characterized in that** the hydraulically setting composition is a concrete.

5. Method of claim 1, 2 or 3, **characterized in that** the hydraulically setting composition is a mortar.

6. Binder composition with increased early strength, consisting of Portland cement CEM I, and optionally admixtures and/or additives, **characterized in that** calcium hydroxide having a BET surface area of 7 to 14 m²/g is contained in an amount from 1 to 10 % by weight based on the Portland cement.

7. Use of a binder composition according to claim 6 for the manufacture of precast concrete.

8. Use according to claim 7, **characterized in that** one or more admixtures selected from water reducing admixtures, concrete plasticizers, air entraining agents, sealants, stabilizers, foaming agents and accelerators are added.

9. Use according to claim 7 or 8, **characterized in that** the concrete contains 240 to 450 kg/m³ cement, 0 to 200 kg/m³ of concrete additive, 0 to 36 kg/m³ concrete admixture, 100 to 250 kg/m³ water and from 1600 to 2000 kg/m³ aggregate.

## Revendications

1. Procédé pour accélérer le développement de la résistance à la pression de compositions du type à durcissement par voie hydraulique dans la plage de 1 à 10 heures, contenant une composition de liant à base de ciment Portland, **caractérisé en ce qu'**on ajoute à la composition de liant, de l'hydroxyde de calcium possédant une surface selon BET de 7 à 14 m²/g.

2. Procédé selon la revendication 1, **caractérisé en ce que** l'hydroxyde de calcium présente une surface selon BET de 11 à 14 m²/g.

3. Procédé selon la revendication 1 ou 2, **caractérisé en ce qu'**on ajoute l'hydroxyde de calcium dans des quantités de 1 à 10 % en poids rapportés au ciment Portland, de préférence dans des quantités de 2 à 7 % en poids et en particulier d'environ 5 % en poids.

4. Procédé selon la revendication 1, 2 ou 3, **caractérisé en ce que** la composition du type à durcissement par voie hydraulique est un béton.

5. Procédé selon la revendication 1, 2 ou 3, **caractérisé en ce que** la composition du type à durcissement par voie hydraulique est un mortier.

6. Composition de liant possédant une résistance initiale supérieure, constituée par du ciment Portland CEM I et de manière facultative par des adjuvants et/ou des additifs, **caractérisée en ce qu'**elle contient de l'hydroxyde de calcium possédant une surface selon BET de 7 à 14 m²/g dans des quantités de 1 à 10 % en poids rapporté au ciment Portland.

7. Utilisation d'une composition de liant selon la revendication 6 pour la fabrication de béton préfabriqué.

8. Utilisation selon la revendication 7, **caractérisée en ce qu'**on ajoute un ou plusieurs additifs choisis parmi un fluidifiant, un liquéfiant du béton, un formateur d'occlusions d'air, un agent d'étanchéité, un stabilisateur, un formateur de mousse et un accélérateur.

9. Utilisation selon la revendication 7 ou 8, **caractérisée en ce que** le béton contient de 240 à 450 kg/m³ de ciment, de 0 à 200 kg/m³ d'additif de béton, de 0 à 36 kg/m³ d'adjuvant de béton, de 100 à 250 kg/m³ d'eau et de 1600 à 2000 kg/m³ de granulat.
